# FASCICULE DE BREVET EUROPEEN

(11) **EP 2 411 858 B1**
(45) Date de publication et mention de la délivrance du brevet: **27.02.2013**
(21) Numéro de dépôt: 10706239.0
(22) Date de dépôt: 02.03.2010
(51) Int. Cl.: G02B 23/16, G02B 23/12

(54) **SYSTEME D'IMAGERIE A AFFICHEUR ACTIF ET MUNI D'UNE BONNETTE**
MIT EINER ZUSÄTZLICHEN AUGENMUSCHEL AUSGESTATTETES AKTIVES ANZEIGEBILDGEBUNGSSYSTEM
ACTIVE DISPLAY IMAGING SYSTEM PROVIDED WITH AN ADDITIONAL EYECUP

(30) Priorité: 27.03.2009 FR 0901502
(43) Date de publication de la demande: 01.02.2012
(73) Titulaire: THALES, 92200 Neuilly-sur-Seine (FR)
(72) Inventeur: MAUREL, Gilles, F-78390 Bois D'arcy (FR)
(74) Mandataire: Henriot, Marie-Pierre
(86) Numéro de dépôt international: PCT/EP2010/052627
(87) Numéro de publication internationale: WO 2010/108764

(56) Documents cités:
- DE-U1- 29 612 466
- US-A- 4 601 540
- US-A- 4 698 857
- US-A- 5 408 359
- US-B1- 6 382 801

## Description

Le domaine de l'invention est celui des systèmes d'imagerie équipés d'un oculaire à afficheur actif.

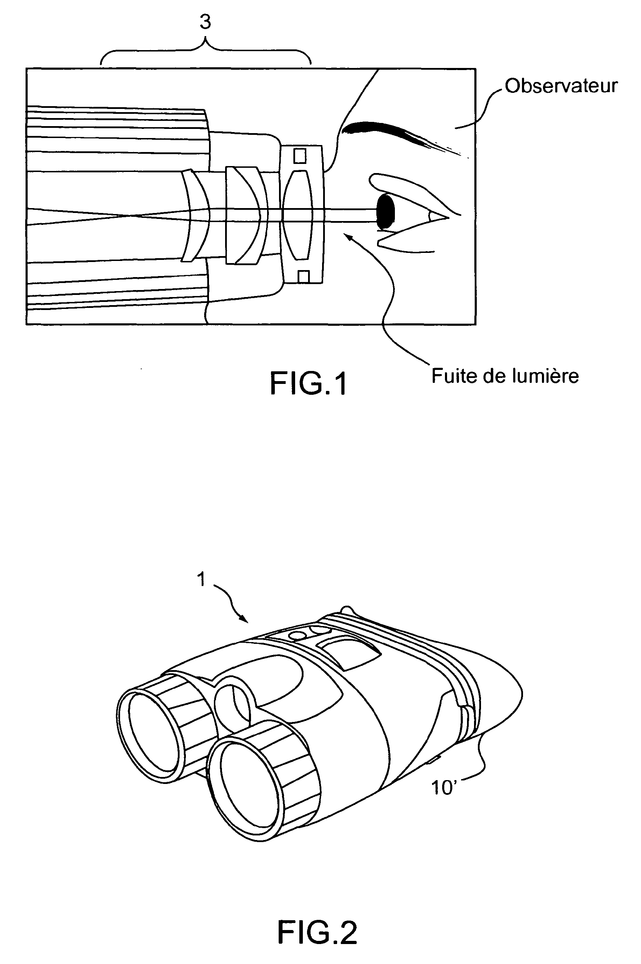

Lors de l'observation d'une scène avec un système d'imagerie, l'observateur regarde dans un oculaire (ou une paire d'oculaires) l'image créée par l'afficheur actif. L'espace entre l'oeil de l'observateur et l'oculaire 3 laisse échapper de la lumière issue de l'afficheur, comme illustré figure 1.

Une première solution pour éliminer ces fuites de lumière consiste à utiliser un protège oeil (ou « eyecup » en anglais) généralement en caoutchouc souple qui épouse le tour de l'oeil ou un masque qui entoure les deux yeux. La figure 2 montre un exemple de masque 10' équipant un système d'imagerie, en l'occurrence une caméra IR 1. Ce protège oeil et ce masque sont aussi désignés bonnette. Cette solution est insuffisante car elle ne garantit pas l'étanchéité optique notamment lorsque l'observateur éloigne le système d'imagerie sans éteindre préalablement l'afficheur. En outre, il peut également y avoir des fuites de lumière du fait que la bonnette, souple ou rigide, n'est pas en contact parfait sur tout le pourtour de l'oeil.

Une seconde solution consiste à compléter la solution précédente par un dispositif électro-optique apte à détecter la présence de l'oeil à la bonne distance sur chaque oculaire et apte à n'allumer l'afficheur que lorsque la présence des yeux à la bonne place est confirmée. Un tel système d'imagerie est compliqué et pas forcément compatible des conditions d'utilisation de la caméra (poussières, pluie, ...). De plus ce genre de dispositif électro-optique émet de la lumière et n'est donc pas furtif.

Une troisième solution est de placer dans le protège oeil, un interrupteur qui allume l'afficheur au moyen d'une pression de la bonnette sur l'observateur. L'inconvénient de cette solution est qu'elle ne garantit pas que la lumière ne fuie pas. En effet il suffit que l'on appuie sur l'interrupteur avec les mains, par exemple, pour que l'afficheur s'allume.

Des protèges-oeil évitant les fuites de lumière sont décrits dans les documents US 4 698 857, US 5 408 359 et US 4 601 540.

Le but de l'invention est d'éviter les fuites de lumière entre un système d'imagerie et un observateur.

La solution de l'invention est fondée sur le principe selon lequel la lumière à l'intérieur d'une bonnette ne fuit pas si l'air ne fuit pas.

Plus précisément l'invention a pour objet un système d'imagerie qui comprend un afficheur actif et une bonnette souple dans un matériau étanche à la lumière, disposée autour de l'afficheur actif et destinée à éliminer les fuites de lumière entre l'afficheur actif et un observateur. Il est principalement caractérisé en ce qu'il comporte :
a. des moyens de pompage aptes à créer une différence de pression de l'air entre l'intérieur et l'extérieur de la bonnette,
b. des moyens d'allumage de l'afficheur actif lorsqu'une différence de pression seuil dite pression d'allumage Pa est atteinte.

De cette façon, lorsqu'une sur-pressurisation (ou une sous-pressurisation) de l'intérieur de la bonnette par rapport à l'extérieur est détectée, l'afficheur actif est allumé.

De préférence, les moyens d'allumage de l'afficheur comportent des moyens pour déterminer la pression de l'air Pi à l'intérieur de la bonnette. Ce sont par exemple un capteur de pression disposé à l'intérieur de la bonnette ou un débitmètre apte à mesurer le flux d'air pompé. La pression de l'air Pe à l'extérieur de la bonnette peut être mesurée avec un capteur supplémentaire ou par effet mémoire sur le capteur situé à l'intérieur de la bonnette.

Selon une caractéristique de l'invention, la bonnette comportant au moins une paroi, les moyens de pompage comprennent un tuyau traversant la (ou les) paroi(s) de la bonnette.

Selon une autre caractéristique de l'invention, la bonnette comporte une paroi intérieure et une paroi extérieure entre lesquelles est ménagé un espace ; la paroi intérieure comprend des micro canaux qui la traversent, et les moyens de pompage comprennent un tuyau qui traverse la paroi extérieure de la bonnette.

Il comprend éventuellement un régulateur de l'air pompé relié aux moyens de pompage.

Les moyens d'allumage de l'afficheur actif comportent avantageusement des moyens de comparaison de la différence de pression de l'air |Pi-Pe| à une pression seuil.

Les moyens de pompage de l'air sont aptes à pulser de l'air dans la bonnette ou, selon une variante ils sont aptes à aspirer l'air de la bonnette.

Lorsque les moyens de pompage sont aptes à pulser de l'air dans la bonnette, le système comprend éventuellement un filtre à poussières.

La bonnette peut comporter des micro trous traversant sa ou ses parois de part en part pour éviter une pression de l'air Pi excessive à l'intérieur de la bonnette. Dans ce cas des chicanes sont présentes entre la paroi intérieure et la paroi extérieure de façon à éviter les fuites de lumière directe par les micro trous.

La bonnette est par exemple de type masque et est destinée à s'adapter aux deux yeux de l'observateur, ou est de type protège oeil et est destinée à s'adapter à un oeil de l'observateur.

Ce système d'imagerie est par exemple une caméra ou un système à amplificateur de lumière.

D'autres caractéristiques et avantages de l'invention apparaîtront à la lecture de la description détaillée qui suit, faite à titre d'exemple non limitatif et en référence aux dessins annexés dans lesquels :
la figure 1 déjà décrite illustre schématiquement les fuites de lumière entre l'oculaire d'un système d'imagerie et un observateur,
la figure 2 déjà décrite représente schématiquement un système d'imagerie en l'occurrence une caméra IR équipée d'une bonnette, selon l'état de la technique,
la figure 3 représente schématiquement une vue de face, en coupe d'un exemple de bonnette pour un système d'imagerie selon l'invention,
la figure 4 est un organigramme décrivant le fonctionnement d'un exemple de moyens de déclenchements de l'afficheur selon l'invention.

D'une figure à l'autre, les mêmes éléments sont repérés par les mêmes références.

Selon l'invention, le système d'imagerie permettant d'éviter les fuites de lumière entre l'afficheur et l'observateur comprend une bonnette souple de protection, munie de moyens de contrôle des fuites d'air entre l'intérieur de la bonnette lorsqu'elle est en position optiquement étanche sur l'observateur, et l'extérieur.

La bonnette est en position sur l'observateur lorsqu'une différence de pression de l'air est maintenue entre l'intérieur de l'enceinte formée par l'afficheur, la bonnette et l'observateur, et l'extérieur de cette enceinte. Par la suite le terme intérieur appliqué à la bonnette se référera à l'intérieur de cette enceinte.

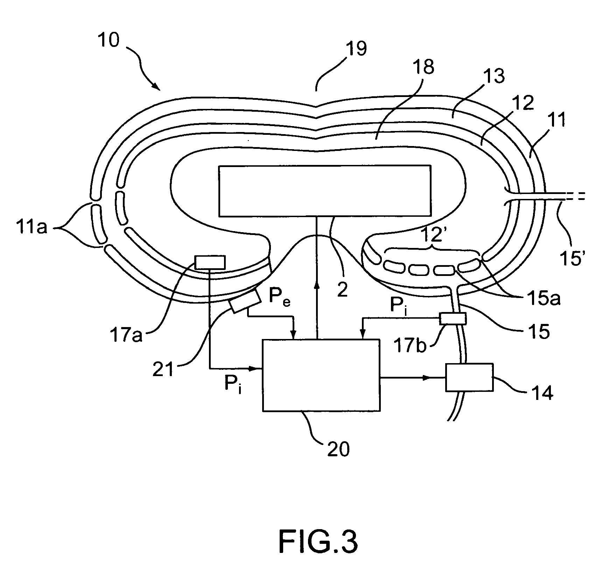

Selon l'invention décrite en relation avec la figure 3, la bonnette 10 est équipée :
- de moyens pour créer une différence de pression de l'air entre l'intérieur de la bonnette et l'extérieur et
- de moyens pour allumer l'afficheur lorsqu'une pression seuil dite pression d'allumage est atteinte.

La bonnette de protection est dans un matériau étanche à la lumière et suffisamment étanche à l'air pour atteindre cette différence de pression par un pompage raisonnable ; à titre d'exemple d'un tel matériau, on peut citer le caoutchouc ou une mousse noire ou tout autre matériau présentant les propriétés citées.

Les moyens pour créer une différence de pression de l'air entre l'intérieur 18 et l'extérieur 19 de cette bonnette comportent une micro pompe à air 14 reliée à l'intérieur et à l'extérieur et des moyens de mise en oeuvre de cette pompe. Il s'agit par exemple d'une micro pompe de type « thinXXS micropump ».

Selon un premier mode de réalisation, la pompe est par exemple reliée à l'intérieur et à l'extérieur de la bonnette de protection par un tuyau souple creux 15' qui traverse la paroi de la bonnette ou les parois 11, 12 lorsqu'elle en comprend deux voire plus.

Selon un autre mode de réalisation, la bonnette comporte une paroi intérieure 12 et une paroi extérieure 11 entre lesquelles est ménagé un espace 13. Les deux parois peuvent être dans le même matériau étanche à la lumière et suffisamment étanche à l'air comme du caoutchouc ou une mousse noire ou tout autre matériau présentant les propriétés citées. Elles peuvent être également dans un matériau différent, l'un au moins étant étanche à la lumière et à l'air : la paroi extérieure est typiquement en caoutchouc, la paroi intérieure étant en mousse.

Des micro canaux 15a sont formés dans la paroi intérieure et la traversent (ces micro canaux sont représentés sur une zone 12' de la paroi) ; cette paroi intérieure est alors dans un matériau au moins étanche à l'air, la paroi extérieure étant dans un matériau étanche à la lumière et suffisamment étanche à l'air. La pompe 14 est alors reliée à l'intérieur 18 d'une part par un tuyau qui traverse la paroi extérieure 11 et qui débouche sur l'espace 13 entre les deux parois ; elle est d'autre part reliée à l'intérieur 18 par ces micro canaux 15a. Ces micro canaux ont typiquement un diamètre d'environ 1/10^{ème} mm. Ce mode de réalisation assure une meilleure répartition spatiale de l'air pompé à l'intérieur de la bonnette.

Selon une variante, la pompe 14 est reliée à l'extérieur 19 de la bonnette via l'intérieur du système d'imagerie (l'expression « intérieur du système d'imagerie » désignant le système d'imagerie sans la bonnette) rendant alors superflu un tuyau traversant la ou les parois de la bonnette. La pompe 14 qui peut également être disposée à l'intérieur du système d'imagerie, est reliée à l'intérieur 18 de la bonnette par un tuyau débouchant directement à l'intérieur de la bonnette ou dans l'espace 13 entre les parois, l'autre extrémité du tuyau débouchant sur l'extérieur du système d'imagerie.

Les moyens pour allumer l'afficheur 2 lorsqu'une différence de pression seuil dite pression d'allumage est atteinte, sont par exemple réduits à un interrupteur actionné par l'observateur qui détermine par lui-même si la pression seuil est atteinte ou qui en est informé par un signal sonore ou autre.

De préférence, les moyens pour allumer l'afficheur 2 lorsqu'une différence de pression seuil dite pression d'allumage est atteinte, comportent des moyens automatiques pour déterminer la pression de l'air à l'intérieur Pi et la pression de l'air à l'extérieur Pe de la bonnette et des moyens automatiques pour comparer la différence de pression |Pi-Pe| à une pression seuil, reliés à des moyens de déclenchement de l'afficheur.

Les moyens pour déterminer la pression de l'air comportent par exemple un débitmètre 17b disposé sur le trajet de l'air pompé, qui détermine indirectement la pression Pi via le flux d'air pompé. Il peut s'agir également d'un capteur de pression 17a situé sur ce même trajet ou disposé à l'intérieur de la bonnette, qui mesure directement la pression Pi. La pression de l'air Pe à l'extérieur de la bonnette peut être mesurée avec un capteur supplémentaire 21 disposé à l'extérieur de la bonnette ou par effet mémoire sur le capteur 17a situé à l'intérieur de la bonnette : Pe est alors égale à la pression mesurée peu de temps après la mise sous tension du système d'imagerie. On peut utiliser par exemple un micro capteur de type MEMS acronyme de l'expression anglo-saxonne « Micro Electro Mechanical System ». Il existe des micro capteurs de très petites dimensions telles que 2 x 2 x 1,5 mm³.

Les moyens 20 pour allumer l'afficheur 2 comprennent en outre des moyens de comparaison de la différence de pression |Pi-Pe| ainsi déterminée (directement ou indirectement), à une pression seuil, dite pression d'allumage Pa prédéterminée au-dessus de laquelle l'afficheur 2 est allumé et au-dessous de laquelle celui-ci est éteint. Cette pression Pa est généralement préalablement stockée dans ces moyens de comparaison. Cet élément de comparaison est par exemple un circuit logique ou un circuit analogique ou une combinaison de circuits analogique et logique ; il peut être disposé à l'intérieur du système d'imagerie.

Il existe divers moyens de mise en oeuvre de la pompe 14. Elle peut être commandée directement par l'observateur au moyen d'un interrupteur par exemple. Elle peut également être commandée par les moyens 20 de déclenchement de l'afficheur qui activent la pompe 14 tant que la différence de pression |Pi-Pe| n'a pas atteint la pression seuil Pa et la désactivent lorsque ce seuil ou un autre est atteint. Dans ce cas l'observateur met en marche ces moyens de déclenchement.

Eventuellement, la bonnette est en outre munie d'un régulateur de pression relié aux moyens pour déterminer la pression Pi, à la pompe et éventuellement aux moyens de déclenchement de l'afficheur. Lorsque l'afficheur 2 est allumé, le régulateur active ou désactive la pompe 14 pour maintenir la différence de pression |Pi-Pe| à une pression optimale proche de Pa : en fonction de la différence tolérée entre la différence de pression |Pi-Pe| et cette pression optimale de fonctionnement Pf, le régulateur active ou désactive la pompe. Ce régulateur peut aussi assurer une fonction de sécurité : il active ou désactive la pompe 14 en fonction de la différence tolérée entre la pression captée à l'intérieur Pi et une pression seuil, dite pression de sécurité Ps.

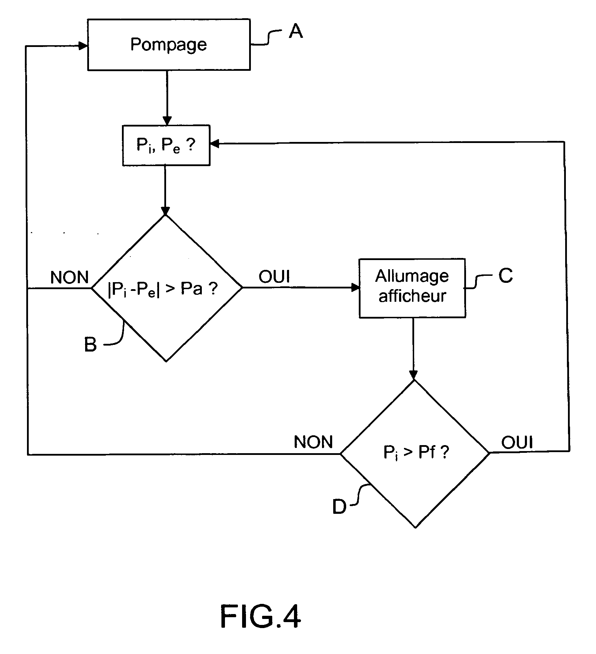

Cette régulation est par exemple assurée par les moyens de déclenchement 20 comme illustré figures 3 et 4. Le fonctionnement de ces moyens de déclenchement 20 est décrit en relation avec l'organigramme de la figure 4. Lorsque la pompe 14 est mise en oeuvre (étape A), la différence de pression |Pi-Pe| est comparée à la pression d'allumage Pa (étape B) :
si |Pi-Pe|<Pa, le pompage est insuffisant et l'étape A est réitérée, sinon l'afficheur 2 est allumé (étape C).

La différence de pression est alors comparée à la pression optimale de fonctionnement Pf (étape D) :
si |Pi-Pe|<Pf, le pompage est maintenu et l'étape A est réitérée, sinon il est désactivé.

Cette fonction de régulation peut aussi être assurée par un régulateur distinct de ces moyens de déclenchement 20 qui peut n'être relié qu'aux moyens 17a pour déterminer la pression Pi, et à la pompe 14.

Jusqu'à présent, l'afficheur 2 est déclenché lorsque la différence de pression entre l'intérieur 18 et l'extérieur 19 de la bonnette est basée sur une pression intérieure Pi, supérieure à la pression ambiante extérieure Pe, c'est-à-dire sur une sur-pressurisation de l'intérieur de la bonnette : Pi>Pe. Dans ce cas, la pompe 14 agit de manière à pulser de l'air de l'extérieur 19 vers l'intérieur 18. On peut alors ajouter à cet équipement, un filtre à poussières.

Selon une alternative, l'afficheur 2 est allumé lorsque la différence de pression entre l'intérieur et l'extérieur de la bonnette est basée sur une pression intérieure Pi, inférieure à la pression ambiante extérieure Pe, c'est-à-dire sur une sous-pressurisation de l'intérieur de la bonnette : Pi<Pe. Dans ce cas, la pompe agit de manière à aspirer l'air de l'intérieur vers l'extérieur. Les étapes de comparaison de la pression intérieure Pi aux pressions seuil, Pa et Ps sont alors inversées : l'afficheur est allumé si Pi<Pa et le pompage est désactivé si Pi<Ps.

La bonnette peut comporter des trous 11a désignés trous de pressurisation, qui ont pour but d'éviter une pression excessive (trop forte ou trop basse selon qu'il s'agit d'une sur-pressurisation ou d'une sous-pressurisation) à l'intérieur 18, qui pourrait endommager les yeux de l'observateur, ou pour éviter une différence de pression |Pi-Pe| excessive. Ces trous de pressurisation traversent les parois 11 et 12 (ou sa paroi) de la bonnette de part en part dans l'épaisseur, sur un parcours comprenant des chicanes optiques. Ils ont typiquement un diamètre d'environ 1/20^{ème} de millimètre ; ils sont suffisamment petits pour qu'une différence de pression suffisante soit maintenue entre l'intérieur et l'extérieur de la bonnette sans pompage excessif.

La bonnette est par exemple de type protège oeil et est destinée à s'adapter à un oeil de l'observateur ou est de type masque et est destinée à s'adapter aux deux yeux de l'observateur, les moyens décrits étant doublés (une partie pour chaque oeil) si nécessaire ; la pompe peut cependant être commune aux deux parties.

Les éléments extérieurs à la bonnette représentés de manière fonctionnelle sur la figure 3, sont dans la pratique disposés de manière ergonomique pour ne pas gêner l'observateur.

Ce système d'imagerie est par exemple une caméra IR ou un système à amplificateur de lumière IR.

## Revendications

1. Système d'imagerie (1) qui comprend un afficheur actif (2) et une bonnette (10) souple dans un matériau étanche à la lumière, disposée autour de l'afficheur actif et destinée à éliminer les fuites de lumière entre l'afficheur actif et un observateur, **caractérisé en ce qu'**il comporte :
a.des moyens de pompage (14) aptes à créer une différence de pression de l'air entre l'intérieur (18) et l'extérieur (19) de la bonnette,
b. des moyens (20) d'allumage de l'afficheur actif (2) lorsqu'une différence de pression seuil dite pression d'allumage Pa est atteinte entre l'intérieur et l'extérieur de la bonnette.

2. Système d'imagerie (1) selon la revendication précédente, **caractérisé en ce que** les moyens d'allumage de l'afficheur comportent des moyens pour déterminer la pression de l'air Pi à l'intérieur (18) et la pression de l'air Pe à l'extérieur (19) de la bonnette.

3. Système d'imagerie (1) selon la revendication précédente, **caractérisé en ce que** les moyens pour déterminer la pression de l'air sont un capteur de pression (17a) disposé à l'intérieur de la bonnette ou un débitmètre (17b) apte à mesurer le flux d'air pompé.

4. Système d'imagerie (1) selon l'une quelconque des revendications précédentes, **caractérisé en ce que** la bonnette comportant au moins une paroi, les moyens de pompage comprennent un tuyau (15') traversant la (ou les) paroi(s) de la bonnette.

5. Système d'imagerie (1) selon l'une quelconque des revendications 1 à 3, **caractérisé en ce que** la bonnette comportant une paroi intérieure (12) et une paroi extérieure (11) entre lesquelles est ménagé un espace (13), la paroi intérieure (12) comprend des micro canaux (15a) qui la traversent, et **en ce que** les moyens de pompage comprennent un tuyau (15) traversant la paroi extérieure (11) de la bonnette.

6. Système d'imagerie (1) selon l'une quelconque des revendications 1 à 3, **caractérisé en ce que** les moyens de pompage comportent un tuyau disposé dans l'intérieur du système d'imagerie qui désigne le système sans la bonnette, et reliant l'intérieur (18) de la bonnette à l'extérieur (19).

7. Système d'imagerie (1) selon l'une quelconque des revendications précédentes, **caractérisé en ce qu'**il comprend un régulateur de l'air pompé relié aux moyens de pompage (14).

8. Système d'imagerie (1) selon l'une quelconque des revendications 2 à 7, **caractérisé en ce que** les moyens d'allumage (20) de l'afficheur actif comportent des moyens de comparaison de la différence de pression de l'air |Pi-Pe| à une pression seuil.

9. Système d'imagerie (1) selon l'une quelconque des revendications précédentes, **caractérisé en ce que** les moyens de pompage (14) sont aptes à pulser de l'air à l'intérieur (18) de la bonnette ou à aspirer l'air de l'intérieur de la bonnette.

10. Système d'imagerie (1) selon l'une quelconque des revendications précédentes, **caractérisé en ce que** les moyens de pompage (14) sont aptes à pulser de l'air à l'intérieur de la bonnette et **en ce qu'**il comprend un filtre à poussières.

11. Système d'imagerie (1) selon l'une quelconque des revendications précédentes, **caractérisé en ce que** la bonnette (10) comprend des micro trous (11a) de pressurisation qui traversent sa ou ses parois de part en part selon un parcours à chicanes optiques pour éviter une pression de l'air Pi excessive à l'intérieur de la bonnette ou une différence de pression |Pi-Pe| excessive.

12. Système d'imagerie (1) selon l'une quelconque des revendications précédentes, **caractérisé en ce que** la bonnette (10) est de type masque et est destinée à s'adapter aux deux yeux de l'observateur, ou est de type protège oeil et est destinée à s'adapter à un oeil de l'observateur.

13. Système d'imagerie (1) selon l'une quelconque des revendications précédentes, **caractérisé en ce que** le système est une caméra ou un système à amplificateur de lumière.

## Claims

1. An imaging system (1) that comprises an active display (2) and a flexible eyecup (10) made from a light-proof material and being disposed around said active display and being designed to eliminate light leakage between the active display and an observer, **characterised in that** it comprises:
a. pumping means (14) that are designed to create a difference in the air pressure between the inside (18) and the outside (19) of the eyecup;
b. means (20) for illuminating the active display (2) when a threshold pressure difference, referred to as illuminating pressure Pa, is reached between the inside and the outside of the eyecup.

2. The imaging system (1) according to the preceding claim, **characterised in that** the means for illuminating the display comprise means for determining the air pressure Pi on the inside (18) and the pressure Pe on the outside (19) of the eyecup.

3. The imaging system (1) according to the preceding claim, **characterised in that** the means for determining the air pressure are a pressure sensor (17a) that is disposed inside the eyecup or a flowmeter (17b) that is designed to measure the flow of pumped air.

4. The imaging system (1) according to any one of the preceding claims, **characterised in that**, since the eyecup comprises at least one wall, the pumping means comprise a pipe (15') that passes through the one or more walls of the eyecup.

5. The imaging system (1) according to any one of claims 1 to 3, **characterised in that**, since the eyecup comprises an inside wall (12) and an outside wall (11) between which a space (13) is provided, the inside wall (12) comprises micro-channels (15a) that pass through said wall, and **in that** the pumping means comprise a pipe (15) passing through the outside wall (11) of the eyecup.

6. The imaging system (1) according to any one of claims 1 to 3, **characterised in that** the pumping means comprise a pipe that is disposed inside the imaging system that constitutes the system without the eyecup, and connects the inside (18) of the eyecup to the outside (19).

7. The imaging system (1) according to any one of the preceding claims, **characterised in that** it comprises a pumped air regulator connected to the pumping means (14).

8. The imaging system (1) according to any one of claims 2 to 7, **characterised in that** the means (20) for illuminating the active display comprise means for comparing the difference in air pressure |Pi-Pe| with a threshold pressure.

9. The imaging system (1) according to any one of the preceding claims, **characterised in that** the pumping means (14) are designed to pulse the air to the inside (18) of the eyecup or to draw the air from inside of the eyecup.

10. The imaging system (1) according to any one of the preceding claims, **characterised in that** the pumping means (14) are designed to pulse the air to the inside of the eyecup and **in that** it comprises a dust filter.

11. The imaging system (1) according to any one of the preceding claims, **characterised in that** the eyecup (10) comprises pressurisation micro-holes (11a) that pass through its one or more walls from one side to the other following an optical chicane path in order to avoid excessive air pressure Pi inside the eyecup or an excessive pressure difference |Pi-Pe|.

12. The imaging system (1) according to any one of the preceding claims, **characterised in that** the eyecup (10) is of the mask type and is designed to be adapted to both eyes of the observer or is of the eye protection type and is designed to be adapted to one eye of the observer.

13. The imaging system (1) according to any one of the preceding claims, **characterised in that** the system is a camera or a light amplification system.

## Patentansprüche

1. Bildgebungssystem (1), das ein aktives Display (2) und eine elastische Augenmuschel (10) aus einem lichtundurchlässigen Material umfasst, die um das aktive Display herum angeordnet ist und die Aufgabe hat, das Austreten von Licht zwischen dem aktiven Display und einem Beobachter zu eliminieren, **dadurch gekennzeichnet, dass** es Folgendes umfasst:
a. Pumpmittel (14) zum Erzeugen einer Druckdifferenz der Luft zwischen dem Innern (18) und dem Äußeren (19) der Augenmuschel,
b. Mittel (20) zum Beleuchten des aktiven Displays (2), wenn eine Druckdifferenzschwelle, Beleuchtungsdruck Pa genannt, zwischen dem Innern und dem Äußeren der Augenmuschel erreicht wird.

2. Bildgebungssystem (1) nach dem vorherigen Anspruch, **dadurch gekennzeichnet, dass** die Beleuchtungsmittel des Displays Mittel zum Ermitteln des Drucks der Luft Pi innerhalb (18) und des Drucks der Luft Pe außerhalb (19) der Augenmuschel umfasst.

3. Bildgebungssystem (1) nach dem vorherigen Anspruch, **dadurch gekennzeichnet, dass** die Mittel zum Ermitteln des Drucks der Luft ein im Innern der Augenmuschel angeordneter Luftsensor (17a) oder ein Durchflussmessgerät (17b) zum Messen des Flusses von gepumpter Luft sind.

4. Bildgebungssystem (1) nach einem der vorherigen Ansprüche, **dadurch gekennzeichnet, dass**, da die Augenmuschel wenigstens eine Wand hat, die Pumpmittel eine die Wand/Wände der Augenmuschel durchquerende Röhre (15') umfassen.

5. Bildgebungssystem (1) nach einem der Anprüche 1 bis 3, **dadurch gekennzeichnet, dass**, da die Augenmuschel eine Innenwand (12) und eine Außenwand (11) mit einem Raum (13) dazwischen umfasst, Mikrokanäle (15a) durch die Innenwand (12) verlaufen, und dadurch, dass die Pumpmittel eine die Außenwand (11) der Augenmuschel durchquerende Röhre (15) umfassen.

6. Bildgebungssystem (1) nach einem der Ansprüche 1 bis 3, **dadurch gekennzeichnet, dass** die Pumpmittel eine Röhre umfassen, die im Innern des Bildgebungssystems angeordnet ist, das das System ohne die Augenmuschel bildet, und die das Innere (18) der Augenmuschel mit dem Äußeren (19) verbindet.

7. Bildgebungssystem (1) nach einem der vorherigen Ansprüche, **dadurch gekennzeichnet, dass** es einen Regler für gepumpte Luft umfasst, der mit den Pumpmitteln (14) verbunden ist.

8. Bildgebungssystem (1) nach einem der Ansprüche 2 bis 7, **dadurch gekennzeichnet, dass** die Beleuchtungsmittel (20) des aktiven Displays Mittel zum Vergleichen der Luftdruckdifferenz |Pi-Pe| mit ein Druckschwellenwert umfassen.

9. Bildgebungssystem (1) nach einem der vorherigen Ansprüche, **dadurch gekennzeichnet, dass** die Pumpmittel (14) die Luft im Innern (18) der Augenmuschel pulsieren oder die Luft aus dem Innern der Augenmuschel ansaugen können.

10. Bildgebungssystem (1) nach einem der vorherigen Ansprüche, **dadurch gekennzeichnet, dass** die Pumpmittel (14) die Luft im Innern der Augenmuschel pulsieren können, und dadurch, dass es einen Staubfilter aufweist.

11. Bildgebungssystem (1) nach einem der vorherigen Ansprüche, **dadurch gekennzeichnet, dass** die Augenmuschel (10) Druckbeaufschlagungsmikrolöcher (11a) umfasst, die von einer Seite zur andern über einen Lichtweg mit Schikanen durch ihre Wand/Wände verlaufen, um einen zu starken Druck der Luft Pi im Innern der Augenmuschel oder eine zu starke Druckdifferenz |Pi-Pe| zu verhindern.

12. Bildgebungssystem (1) nach einem der vorherigen Ansprüche, **dadurch gekennzeichnet, dass** die Augenmuschel (10) vom Maskentyp ist und an beide Augen des Beobachters angepasst werden kann oder vom Augenschutztyp ist und an ein Auge des Beobachters angepasst werden kann.

13. Bildgebungssystem (1) nach einem der vorherigen Ansprüche, **dadurch gekennzeichnet, dass** das System eine Kamera oder ein Lichtverstärkungssystem ist.
